# EUROPEAN PATENT APPLICATION

(11) **EP 1 067 814 A1**
(43) Date of publication of application: **10.01.2001**
(21) Application number: 99113132.7
(22) Date of filing: 07.07.1999
(51) Int. Cl.: H04Q 7/38

(54) **Mobile station and communication system with variable reception cycle**

(71) Applicant: SIEMENS AKTIENGESELLSCHAFT, 80333 München (DE)
(72) Inventor: Bisgaard Peter, 9440 Aabybro (DK)

(57) **Abstract**

The invention concerns a mobile station and a communication system for the exchange of data over a radio channel. The mobile station operates a receiver to receive paging messages at predetermined points of time. These paging messages are used by the fixed station to indicate that the fixed station has data to be transmitted to the mobile station. Different services can be used. For different services the time difference between two consecutive points of time at which the mobile station operates the receiver to receive a paging message are different for the different services.

## Description

### Prior art

The invention relates to a mobile station and a communication system comprising a mobile station and a fixed station with the generic features of the independent patent claims.

The GSM-System is a communications system comprising mobile stations and fixed stations. Within this communication system it is possible to access a mobile station via fixed station. It is therefore possible to direct telephone calls via the fixed station towards the mobile station. To allow an access to the mobile station within a reasonable time the mobile station has to monitor a paging channel that comprises paging messages. The paging message indicates that the fixed station has information that should be received by the mobile station. Within the GSM-System it is already known to use different services like speech, short message service (SMS) and data services. All these different methods use paging messages to make the mobile station initiate connection establishment.

### Advantages of the invention

The mobile station and the communication system according to the features of the independent patent claims have the advantage that the operating time of the receiver of the mobile station is reduced. This results in an reduced power consumption of the mobile station or a enhanced stand-by time of the mobile station.

Further advantages arise from the features of the dependent patent claims. The mobile station can be operated in a sleep mode between the possible reception of two paging messages thereby further reducing the power consumption. The different services can include speech, short message service, fax, circuit switch data transfer and packet switch data transfer. A very easy implementation uses fixed paging slots having an equal distance to each other but uses only selected off said slots for transmitting a paging message for a specific service. This method is very easy and does not require a complicated algorithm for determining the exact time when a paging message for a specific service has to be received. Further it is possible that the mobile station reacts to a very low capacity of his battery by admitting only services that require a low power consumption by seldom operating the receiver to receive a paging message.

### Drawings

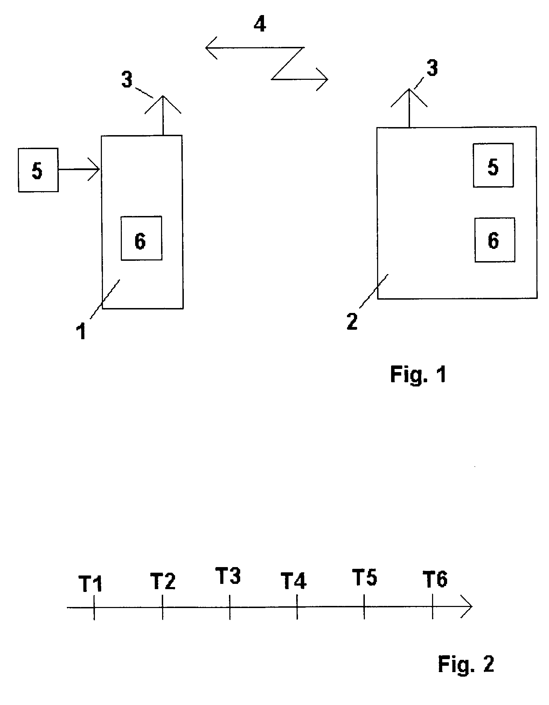

Examples of the invention are shown in the drawings and described in greater detail in the description. Figure 1 shows a communication system comprising a mobile station and a fixed station and figure 2 shows a time axis indicating different paging slots.

### Description

Figure 1 shows a communication system comprising a mobile station 1 and a fixed station 2. The mobile station 1 and the fixed station 2 each comprise an antenna 3 that allows the exchange of information via an wireless "air"-interface 4. It is therefore possible to exchange messages via a radio channel. The mobile station 1 and the fixed station 2 comprise different services. The service 6 might be a telephone service that allows the exchange of speech data (a normal telephone conversation) between the mobile station 1 and the fixed station 2. The telephone service 6 is therefore a normal mobile or wireless telephone system that allows a user of the mobile station to establish telephone connections to a user in a fixed network that is connected to the fixed station 2. The communication system also comprises further services. As one example of this further services a short message service 5 is shown that allows the sending and the reception of short text messages. There might also be other services like fax or the exchange of data either in the form of a sequential stream of data or in the form of small data packages (GPRS). The services might be included in the mobile station and fixed station or might as well be externally. As an example figure 1 shows that a mobile station 1 receives the data for a short message service from an external device while the fixed station 2 has the device for the short message service included.

Since the mobile station 1 is normally supplied by a battery the power consumption of the mobile station 1 is very essential. Since the user of a mobile station wants a long operating or standby time, it is essential, that the mobile station 1 consumes as little power as possible. To allow the fixed station to establish a connection to the mobile station 1 in a reasonable short amount of time, the mobile station 1 has to operate a receiver that is capable to receive a specific message from the fixed station 2. Since the power consumption of a receiver is quite high it is only operated at very short intervals in time, that are known to the mobile station 1 and the receiver 2. This allows a reduction of the power consumption since the receiver will not be operated all the time. If the whole system is designed to allow an access from the fixed station 2 to the mobile station 1 within one second, the mobile station 1 has to operate its receiver every second, to control if the mobile station 2 is trying to access the mobile station 1. The most demanding service for the reaction is normally the telephone service since a user that calls another user normally expects an answer within a few seconds. When other services are used, for example fax or short message service, it is sufficient that the message is send from the fixed station 2 to the mobile station 1 within a couple of minutes. If the mobile station 1 is intended to operate with the telephone service 6, it is therefore necessary, that the mobile station 1 controls every second if the fixed station 2 relays a paging message to the mobile station 1. If the mobile station 1 operates only with the short message service or the fax service, it is sufficient, that the mobile station 1 checks only every minute if a paging message is send by the fixed station 2. The invention suggests to use paging messages send with different time intervals for the different services. Since there is always an agreement between the mobile station 1 and the fixed station 2 at which points in time paging messages can be send from the fixed station 2 to the mobile station 1, the time lengths between two consecutive paging messages is different for the different paging messages. As already described the difference between two possible paging messages for the telephone service could be one second or smaller, whereasthe time difference between two consecutive fax or SMS paging messages can be considerably greater. So when the mobile station is operated only with a SMS or fax service the standby time of the mobile station 1 is significantly enhanced.

The invention is very useful if the mobile station also contains a device to monitor the capacity of the battery. When the battery capacity falls below a certain limit, for example 10 percent of its capacity, the mobile station 1 has the possibility to degrade the service to reduce the amount of power consumed. The mobile station 1 could for example terminate the telephone service 6 and can only operate a short message service 5. If somebody then tries to call the mobile station the call will be directed to a mailbox where the caller can leave a message for the user. The user will then be notified by a short message or any other data message that allows the transmission of text data. The user has then the possibility to listen to the message in the mailbox or call the person that has tried to reach him. With this kind of operation it is possible to use the last 10 percent of battery capacity to allow a reduced accessibility of the user of the mobile station.

In principle every algorithem that uses different time intervals for the different paging messages can be used. Figure 2 shows a very simple method that uses equidistant paging slots. Within the paging slots are then the different paging messages. Figure 2 shows a time axis and short time slots T1, T2, T3, T4, T5, T6.... The consecutive time slots are all separated by the same time difference. Each of the shown T1, T2, ... is a short slot in time, that is large enough to allow a paging message to be transmitted in this time slot. A service that requires a short response time, like the telephone service, will have a paging message within all the consecutive time slots T1, T2, T3, ... . A service that requires no short response time (for example SMS) only allows a paging message every fifth slot for example T0, T5, T10, and so on. This method allows a very easy calculation when the next time slot for a monitoring period of a paging signal occurs.

## Claims

1. Mobile station (1) for the exchange of data with a fixed station (2) over a radio channel (4), wherein the mobile station (1) operates a receiver at predetermined points of time to receive paging messages, said paging messages indicating that the fixed station (2) has data to be transmitted to the mobile station (1), wherein the mobile station (1) is capable to use different services (5, 6), characterized in, that the time difference between two consecutive points of time at witch the mobile station (1) operates the receiver to receive paging messages are different for the different services (5, 6).

2. Mobile station (1) according to claim 1, characterized in, that the mobile station is operated in a sleep mode between the fixed points of time.

3. Mobile station (1) according to any preceeding claim, characterized in, that the different services include a telephone service (6), a short message service (5), a fax service, and a data transfer service.

4. Mobile station (1) according to any preceeding claim, characterized in, that the paging messages for the different services are within paging slots (T1, T2, ...,) and that a service with high priority could use every paging slot and a service with low priority uses only selected of said paging slots.

5. Mobile station according to any preceeding claim, characterized in, that the mobile station (1) has a battery and means to monitor the capacity of the battery, and if the capacity of the battery falls below a limit only services that require a low power consumption by seldom operating the receiver to receive a paging message are maintained.

6. Communication system comprising a mobile station (1) for the exchange of data with a fixed station (2) over a radio channel (4), wherein the mobile station (1) operates a receiver at predetermined points of time to receive paging messages, said paging messages indicating that the fixed station (2) has data to be transmitted to the mobile station (1), wherein the mobile station (1) is capable to use different services (5, 6), characterized in, that the time difference between two consecutive points of time at witch the mobile station (1) operates the receiver to receive paging messages are different for the different services (5, 6).
